# EUROPEAN PATENT APPLICATION

(11) **EP 4 765 462 A1**
(43) Date of publication of application: **24.06.2026**
(21) Application number: 24890007.8
(22) Date of filing: 14.05.2024
(51) Int. Cl.: H01M 50/593, H01M 50/204, H01M 50/244

(54) **BATTERY MODULE, BATTERY AND ELECTRICAL APPARATUS**

(30) Priority: 13.11.2023 CN 202311510477
(71) Applicant: Contemporary Amperex Technology Co., Limited, Ningde, Fujian 352100 (CN)
(72) Inventor: SHAO, Ziyu, Ningde, Fujian 352100 (CN); WU, Dan, Ningde, Fujian 352100 (CN)
(74) Representative: Gong, Jinping
(86) International application number: PCT/CN2024/093029
(87) International publication number: WO 2025/102636

(57) **Abstract**

The present application provides a battery module, a battery, and a power-consuming apparatus, and belongs to the field of battery technologies. The battery module includes a battery group, an end plate, and an insulation member. The end plate is arranged in a first direction on a side of the battery group, and an avoidance region is formed at a corner of the end plate. The insulation member is arranged in the first direction between the battery group and the end plate to insulate the battery group from the end plate. A corner region is formed at a position on the insulation member corresponding to the avoidance region, and the corner region is fixedly connected to the battery group. Fixedly connecting, to the battery group, the corner region formed at the insulation member corresponding to the avoidance region of the end plate helps to reduce the phenomenon of warping or separation of the corner region of the insulation member, such that the structural stability of the insulation member mounted between the end plate and the battery group can be improved, and the interference effect on an assembly region of the end plate due to warping or separation of the corner region of the insulation member can also be reduced, thereby reducing the assembly difficulty of the battery module and improving the assembly quality of the battery module.

## Description

### CROSS-REFERENCE TO RELATED APPLICATIONS

The present application claims priority to Chinese Patent Application No. 202311510477X, entitled "BATTERY MODULE, BATTERY, AND POWER-CONSUMING APPARATUS" and filed on November 13, 2023, which is incorporated herein by reference in its entirety.

### TECHNICAL FIELD

The present application relates to the field of battery technologies, and specifically, to a battery module, a battery, and a power-consuming apparatus.

### BACKGROUND

In recent years, new energy automobiles have been rapidly developed. In the field of electric automobiles, a power battery, as a power source of an electric automobile, plays an important role that is irreplaceable. A battery is provided with a box and a plurality of battery modules accommodated in the box, and a battery module includes a plurality of battery cells. A battery, as a core part of a new energy automobile, has a relatively high requirement in terms of safety. Therefore, an insulation member is arranged between an end plate of a battery module and a plurality of battery cells, to improve use safety of the battery module. However, an existing battery module is prone to interference and impact of the insulation member during assembly, causing relatively high difficulty in assembly of the battery module and relatively poor assembly quality.

### SUMMARY

Embodiments of the present application provide a battery module, a battery, and a power-consuming apparatus, so as to effectively reduce assembly difficulty of the battery module and improve assembly quality of the battery module.

According to a first aspect, an embodiment of the present application provides a battery module, including a battery group, an end plate, and an insulation member, where the end plate is arranged in a first direction on a side of the battery group, and an avoidance region is formed at a corner of the end plate; the insulation member is arranged in the first direction between the battery group and the end plate to insulate the battery group from the end plate, where a corner region is formed at a position on the insulation member corresponding to the avoidance region, and the corner region is fixedly connected to the battery group.

In the above technical solution, the insulation member is arranged between the end plate and the battery group, so that the insulation member can insulate the end plate and the battery group from each other, to reduce a risk of short-circuiting between the end plate and the battery group, thereby facilitating improving use reliability of the battery module. Fixedly connecting, to the battery group, the corner region formed at the insulation member corresponding to the avoidance region at the corner of the end plate helps to reduce the phenomenon of warping or separation of the corner region of the insulation member in the avoidance region of the end plate, such that the structural stability of the insulation member mounted between the end plate and the battery group can be improved, and the interference effect on an assembly region of the end plate due to warping or separation of the corner region of the insulation member can also be reduced, thereby reducing the assembly difficulty of the battery module and improving the assembly quality of the battery module.

In some embodiments, the battery module further includes a bonding member, where the bonding member is arranged between the insulation member and the battery group, and the bonding member connecting the corner region to the battery group.

In the above technical solution, the bonding member is arranged between the insulation member and the battery group, so that the corner region of the insulation member can be bonded to the battery group by using the bonding member, thereby fixedly connecting the corner region of the insulation member to the battery group. By using the battery module of this structure, it is convenient to fix the corner region of the insulation member to the battery group, to relieve a phenomenon of warping or separation of the corner region of the insulation member. The structure is simple and is convenient to assemble.

In some embodiments, the insulation member is rectangular, four corner regions are formed on the insulation member, the battery module includes four bonding members, and each of the corner regions is connected to the battery group by using one of the bonding members.

In the above technical solution, the insulation member has a rectangular structure, so that four corner regions are formed on the insulation member. Four bonding members are correspondingly arranged in the four corner regions respectively, so that the four corner regions of the insulation member can be bonded to the battery group by using the bonding members, thereby further improving structural stability of the insulation member arranged between the end plate and the battery group, and effectively relieving a phenomenon of warping or separation in the four corner regions of the insulation member.

In some embodiments, in the first direction, a region that is on a side of the insulation member facing away from the battery group and that corresponds to the bonding member is provided with a groove, and an orthographic projection of the bonding member is located in the groove.

In the above technical solution, the groove is provided in the region that is on the side of the insulation member facing away from the battery group and that corresponds to the bonding member, so that a protrusion that protrudes in the direction away from the battery group and that is formed after the corner region of the insulation member provided with the bonding member is bonded to the battery group can be accommodated in the groove. By using the battery module having such a structure, interference impact of the protrusion that protrudes in the direction away from the battery group and that is formed after the region of the insulation member provided with the bonding member is bonded to the battery group and other components such as the end plate can be reduced, so that interference impact of the protrusion that is formed because the insulation member is provided with the bonding member on the assembly region of the end plate can be reduced, thereby reducing the assembly difficulty of the battery module and improving the assembly quality of the battery module.

In some embodiments, in the first direction, a thickness of the bonding member is D₁, and a groove depth of the groove is H, satisfying: D₁ ≤ H.

In the above technical solution, the thickness of the bonding member in the first direction is set to be less than or equal to the groove depth of the groove in the first direction, so that the protrusion that protrudes in the direction away from the battery group and that is formed after the corner region of the insulation member provided with the bonding member is bonded to the battery group can be entirely accommodated in the groove without extending out of the groove, thereby further reducing interference impact of the protrusion that is formed because the insulation member is provided with the bonding member on the assembly region of the end plate.

In some embodiments, the insulation member includes a first insulation layer and a second insulation layer that are stacked in the first direction, the first insulation layer is located on a side of the second insulation layer facing the battery group, and the bonding member is arranged on a side of the first insulation layer facing the battery group, where a gap is provided in the first direction in a region of the second insulation layer corresponding to the bonding member, the gap extends through the second insulation layer, and the gap and a surface of the first insulation layer facing the second insulation layer jointly define the groove.

In the above technical solution, the insulation member is provided with the first insulation layer and the second insulation layer. The first insulation layer and the second insulation layer are stacked in the first direction, and the first insulation layer is located on a side of the second insulation layer that faces the battery group. By disposing the bonding member on the side of the first insulation layer that faces the battery group, and disposing, on a region on the second insulation layer corresponding to the bonding member, a gap that extends through the second insulation layer, the gap and a surface of the first insulation layer that faces the second insulation layer jointly form a groove, so as to form the groove on a region that corresponds to the bonding member and that is on a side of the insulation member facing away from the battery group. Use of the insulation member of such a structure facilitates processing and manufacturing, and helps reduce difficulty in disposing a groove on the insulation member. Therefore, the production efficiency of the battery module can be effectively improved.

In some embodiments, a thickness of the first insulation layer is equal to a thickness of the second insulation layer in the first direction.

In the above technical solution, through a structure in which the first insulation layer and the second insulation layer of the insulation member are set to have a same thickness in the first direction, the first insulation layer and the second insulation layer are formed separately by processing sheets having the same thickness, thereby facilitating optimizing reserves of raw materials, to reduce manufacturing costs of the insulation member.

In some embodiments, the insulation member further includes a bonding layer; and the bonding layer is arranged between the first insulation layer and the second insulation layer in the first direction, and the bonding layer connects the first insulation layer to the second insulation layer.

In the above technical solution, the bonding layer is arranged between the first insulation layer and the second insulation layer, so that the first insulation layer and the second insulation layer can be connected by using the bonding layer. In an aspect, the structural stability of the first insulation layer and the second insulation layer being stacked can be improved, and in another aspect, the assembly difficulty of the first insulation layer and the second insulation layer can be reduced, thereby facilitating manufacturing, and facilitating optimizing a production rhythm.

In some embodiments, a thickness of the insulation member in the first direction is D₂, satisfying: 0.4 mm ≤ D₂ ≤ 2 mm.

In the above technical solution, by setting the thickness of the insulation member in the first direction to be greater than or equal to 0.4 mm, in an aspect, an effect of insulating the end plate from the battery group by the insulation member can be improved, to reduce a risk of short-circuiting between the end plate and the battery group; in another aspect, the hardness of the insulation member can be improved, so that the insulation member has a relatively good contour form, thereby facilitating assembly of the insulation member between the end plate and the battery group, and reducing a phenomenon of deformation of the insulation member. The thickness of the insulation member in the first direction is set to be less than or equal to 2 mm, to save space occupied by the insulation member, thereby improving space utilization of the battery module, which helps improve the energy density of the battery module.

In some embodiments, an end of the insulation member in a second direction is provided with a flanging portion, the flanging portion extends from a side of the insulation member facing the battery group toward a direction approaching the battery group, the flanging portion butts against the battery group in the second direction, and the second direction is perpendicular to the first direction.

In the above technical solution, the flanging portion is arranged at an end of the insulation member in the second direction, and the flanging portion protrudes, in the first direction, from a side of the insulation member that faces the battery group, so that the flanging portion can butt against the battery group in the second direction. By using the insulation member of this structure, in an aspect, the insulation member can be limited and positioned to some extent by using the flanging portion, so as to assemble the insulation member between the end plate and the battery group, thereby helping reduce difficulty in assembling the insulation member between the end plate and the battery group, and in another aspect, the firmness and structural stability of assembling the insulation member between the end plate and the battery group can be further improved.

In some embodiments, the battery group includes a plurality of battery cells, and the plurality of battery cells are stacked in the first direction.

In the above technical solution, the battery group is provided with a plurality of battery cells, and the plurality of battery cells is in a structure of being stacked in the first direction, so that it is convenient to arrange the insulation member between the end plate and an adjacent battery cell, and it is convenient to fixedly connect the corner region of the insulation member to the adjacent battery cell, thereby helping reduce assembly difficulty of the insulation member and the battery group.

In some embodiments, the battery module includes two end plates, and the two end plates are respectively arranged on two sides of the battery group in the first direction, where the insulation member is arranged between each of the two end plates and the battery group in the first direction.

In the above technical solution, the battery module is provided with two end plates, and the two end plates are respectively located on two sides of the battery group in the first direction, so that the battery group can be clamped and assembled. By arranging an insulation member between each of the two end plates and the battery group, the two end plates and the battery group can be effectively insulated, to improve use reliability of the battery module.

In some embodiments, the battery module further includes two side plates, the two side plates are respectively arranged on two sides of the battery group in a third direction, two ends of the side plate in the first direction are respectively connected to the two end plates, and the third direction is perpendicular to the first direction.

In the above technical solution, the battery module is further provided with two side plates. The two side plates are respectively arranged on two sides of the battery group in the third direction, and two ends of the side plate in the first direction are respectively connected to two end plates, so that the two side plates and the two end plates define an outer frame for assembling the battery group, which helps improve integrity and structural stability of the battery module.

According to a second aspect, an embodiment of the present application further provides a battery, including the foregoing battery module.

According to a third aspect, an embodiment of the present application further provides a power-consuming apparatus, including the foregoing battery. The battery is configured to provide electric energy.

### BRIEF DESCRIPTION OF THE DRAWINGS

To describe the technical solutions of the embodiments of the present application more clearly, the following briefly describes the accompanying drawings required for describing the embodiments. It should be understood that, the following accompanying drawings show only some embodiments of the present application, which should not be considered as a limitation on the scope. A person of ordinary skill in the art may still derive other related accompanying drawings according to the accompanying drawings without creative efforts.
FIG. 1 is a schematic diagram of a structure of a vehicle according to some embodiments of the present application;
FIG. 2 is a structural exploded view of a battery according to some embodiments of the present application;
FIG. 3 is a schematic structural diagram of a battery module according to some embodiments of the present application;
FIG. 4 is a structural exploded view of a battery module according to some embodiments of the present application;
FIG. 5 is a schematic structural diagram of an insulation member of a battery module according to some embodiments of the present application;
FIG. 6 is a front view of a side of an insulation member of a battery module facing a battery group according to some embodiments of the present application;
FIG. 7 is a front view of a side of an insulation member of a battery module facing away from a battery group according to some embodiments of the present application;
FIG. 8 is a front view of an insulation member of a battery module in a third direction according to some embodiments of the present application;
FIG. 9 is a schematic structural diagram of a second insulation layer of an insulation member of a battery module according to some embodiments of the present application; and
FIG. 10 is a cross-sectional view of an insulation member of a battery module according to some embodiments of the present application.

List of reference numerals: 1000-vehicle; 100-battery; 10-box; 11-first box body; 12-second box body; 20-battery module; 21-battery group; 211-battery cell; 22-end plate; 221-avoidance region; 23-insulation member; 231-corner region; 232-groove; 233-first insulation layer; 234-second insulation layer; 2341-gap; 235-bonding layer; 236-flanging portion; 24-side plate; 25-bonding member; 200-controller; 300-motor; X-first direction; Y-second direction; and Z-third direction.

### DETAILED DESCRIPTION

To make the objectives, technical solutions, and advantages of embodiments of the present application clearer, the following clearly describes the technical solutions in the embodiments of the present application with reference to the accompanying drawings in the embodiments of the present application. Apparently, the described embodiments are merely some embodiments of the present application rather than all of the embodiments. All other embodiments obtained by those of ordinary skill in the art based on the embodiments of the present application without making creative efforts shall fall within the protection scope of the present application.

Unless otherwise defined, all technical and scientific terms used in the present application have same meanings as commonly understood by a person skilled in the technical field of the present application. The terms used in the filed specification in the present application are merely for an objective of describing specific embodiments, and are not intended to limit the present application. The terms "include", "include" and any variations thereof in the specification and claims of the present application and in the above descriptions of the accompanying drawings are intended to cover non-exclusive inclusion. The terms "first", "second", etc. in the specification and claims of the present application or the drawings are intended to distinguish different objects, and not to describe a specific order or primary-secondary relationship.

Reference to "embodiment" in the present application means that a particular feature, structure or characteristic described in combination with the embodiment may be included in at least one embodiment of the present application. Appearances of the phrase in various locations in this specification are not necessarily all referring to a same embodiment, nor are separate or alternative embodiments mutually exclusive of another embodiment.

In the descriptions of the present application, it should be noted that, unless otherwise expressly specified and limited, the terms "mount", "connect", "connection" and "attachment" should be understood in a broad sense. For example, the connection may be a fixed connection, a detachable connection, or an integral connection; or the connection may be a direct connection, an indirect connection through an intermediate medium, or internal communication between two elements. A person of ordinary skill in the art may understand specific meanings of the foregoing terms in the present application according to specific situations.

The term "and/or" in the present application only describes an association relationship for describing associated objects and represents that three relationships may exist. For example, A and/or B may represent the following three cases: Only A exists, both A and B exist, and only B exists. In addition, the character "/" in the present application generally indicates an "or" relationship between the associated objects.

In the embodiments of the present application, same reference numerals represent same components, and for brevity, detailed descriptions of the same components are omitted in different embodiments. It will be appreciated that dimensions, such as the thickness, the length, and the width of various components in the embodiments of the present application and the entire thickness, length, and the width of an integrated apparatus shown in the accompanying drawings are merely exemplary descriptions, and should not be construed as any limitation to the present application.

"Plurality of" in the present application means two or more (including two).

In the embodiments of the present application, the battery cell may be a secondary battery. The secondary battery refers to a battery cell that can be recharged to activate active materials for continuous use after the battery cell is discharged.

The battery cell may be a lithium-ion battery, a sodium-ion battery, a sodium/lithium-ion battery, a lithium metal battery, a sodium metal battery, a lithium sulfur battery, a magnesium-ion battery, a nickel hydrogen battery, a nickel cadmium battery, a lead storage battery, and the like. The embodiments of the present application are not limited to this.

The battery cell generally includes an electrode assembly. The electrode assembly includes a positive electrode, a negative electrode, and an insulation member. During charging and discharging of the battery cell, active ions (for example, lithium ions) are intercalated and deintercalated back and forth between the positive electrode and the negative electrode. The spacer is arranged between the positive electrode and the negative electrode, mainly to prevent a short circuit between the positive and negative electrodes and to allow active ions to pass through.

In some embodiments, the positive electrode may be a positive electrode plate, and the positive electrode plate includes a positive electrode current collector and a positive electrode active material arranged on at least one surface of the positive electrode current collector.

In some embodiments, the negative electrode may be a negative electrode plate. The negative electrode plate may include a negative electrode current collector.

In some implementations, the electrode assembly further includes an isolation member, and the isolation member is arranged between the positive electrode and the negative electrode.

In some implementations, the insulation member is a separator. There may be a plurality of types of separators, and any well-known separator of a porous structure having good chemical stability and mechanical stability may be used.

In some implementations, the electrode assembly is of a winding structure. The positive electrode plate and the negative electrode plate are wound into the winding structure.

In some implementations, the electrode assembly is of a laminated structure.

For example, a plurality of positive electrode plates and a plurality of negative electrode plates may be arranged respectively, and the plurality of positive electrode plates and the plurality of negative electrode plates are alternately stacked.

For example, a plurality of positive electrode plates may be arranged, the negative electrode plate may be folded to form a plurality of folding segments that are stacked, and one positive electrode plate is clamped between adjacent folding segments.

For example, the positive electrode plate and the negative electrode plate are both folded to form a plurality of folding segments that are stacked.

For example, a plurality of isolation members may be arranged, which are respectively arranged between any adjacent positive electrode plates or negative electrode plates.

For example, the isolation members may be continuously arranged, and are arranged between any adjacent positive electrode plates or negative electrode plates in a folding or winding manner.

In some implementations, the electrode assembly may be in a shape of a cylinder, a flat shape, or a polygon prism.

In some implementations, the electrode assembly is provided with a tab, and the tab may output a current from the electrode assembly. The tab includes a positive electrode tab and a negative electrode tab.

In some implementations, the battery cell may include a housing. The housing is configured to package components such as the electrode assembly and the electrolyte. The housing may be a steel housing, an aluminum housing, a plastic housing (for example, polypropylene), a composite metal housing (for example, a copper-aluminum composite housing), an aluminum-plastic film, or the like.

For example, the battery cell may be a cylindrical battery cell, a prismatic battery cell, a pouch cell, or a battery cell in another shape. The prismatic battery cell includes, but not limited to, a square-case battery cell, a blade-shaped battery cell, and a multi-prism battery. For example, the multi-prism battery may be a hexagonal prism battery.

A battery mentioned in embodiments of the present application is a single physical module including one or more battery cells to provide a higher voltage and a higher capacity.

In some embodiments, a battery may be a battery module. When there are a plurality of battery cells, the plurality of battery cells are arranged and fixed to form a battery module.

In some embodiments, the battery may be a battery pack. The battery pack includes a box and a battery cell, and the battery cell or the battery module is accommodated in the box.

In some embodiments, the box may be used as a part of a chassis structure of a vehicle. For example, a part of the box may be at least a part of a floor of the vehicle, or a part of the box may be at least a part of a cross beam and a longitudinal beam of the vehicle.

In some embodiments, the battery may be an energy storage apparatus. The energy storage apparatus includes an energy storage container, an energy storage electric cabinet, and the like.

A battery has outstanding advantages such as a high energy density, small environmental pollution, a large power density, a long service life, a wide adaptation range, and a small self-discharge coefficient, and is an important component of the development of new energy sources nowadays. Design factors in many aspects need to be all considered for the development of the battery technology, such as an energy density, a cycle life, a discharge capacity, a charge-discharge rate, and other performance parameters. In addition, the safety of the battery also needs to be considered.

For a common battery, the battery includes a box and a plurality of battery modules accommodated in the box. The battery module includes a plurality of battery cells that are stacked and a side plate and an end plate that are arranged around the plurality of battery cells. An avoidance region is formed at a corner of the end plate, and a through-hole for locking a bolt is provided in the avoidance region. Because the end plate is made of a metallic conductive material, to improve use safety of the battery module, an insulation member is usually clamped between the end plate and the plurality of battery cells in a related technology, so that the insulation member can insulate the end plate from the battery cells, to reduce a risk of short-circuiting between the battery cells and the end plate. However, the insulation member of the battery module of this structure easily becomes warped at the four corners at the locations corresponding to the avoidance regions of the end plate. Consequently, in an aspect, the assembly quality of the insulation member is poor, and in another aspect, after the insulation member is warped, interference impact is easily caused to the assembly region in which the bolt of the end plate of the battery module is locked. Consequently, the assembly difficulty of the battery module is relatively high, and the assembly quality of the battery module is relatively poor.

Based on the foregoing consideration, to resolve problems of relatively high difficulty in an assembly process of the battery module and relatively poor assembly quality, an embodiment of the present application provides a battery module. The battery module includes a battery group, an end plate, and an insulation member. The end plate is arranged in a first direction on a side of the battery group, and an avoidance region is formed at a corner of the end plate. The insulation member is arranged in the first direction between the battery group and the end plate to insulate the battery group from the end plate. A corner region is formed at a position on the insulation member corresponding to the avoidance region, and the corner region is fixedly connected to the battery group.

In the battery module of this structure, the insulation member is arranged between the end plate and the battery group, so that the insulation member can insulate the end plate and the battery group from each other, to reduce a risk of short-circuiting between the end plate and the battery group, thereby facilitating improving use reliability of the battery module. Fixedly connecting, to the battery group, the corner region formed at the insulation member corresponding to the avoidance region at the corner of the end plate helps to reduce the phenomenon of warping or separation of the corner region of the insulation member in the avoidance region of the end plate, such that the structural stability of the insulation member mounted between the end plate and the battery group can be improved, and the interference effect on an assembly region of the end plate due to warping or separation of the corner region of the insulation member can also be reduced, thereby reducing the assembly difficulty of the battery module and improving the assembly quality of the battery module.

The battery module disclosed in the embodiments of the present application may be used in but is not limited to a power-consuming apparatus such as a vehicle, a ship, or an aircraft. The battery module, the battery, and the like disclosed in the present application may be used to form a power supply system of the power-consuming apparatus, thereby helping alleviate a problem that the insulation member of the battery module is prone to be warped at a corner to cause interference to another assembly region, so as to reduce the assembly difficulty of the battery module and improve the assembly quality of the battery module.

An embodiment of the present application provides a power-consuming apparatus using a battery as a power supply. The power-consuming apparatus may be, but is not limited to, a mobile phone, a tablet, a laptop, an electric toy, an electric tool, a battery car, an electric automobile, a ship, a spacecraft, or the like. The electric toy may include a fixed or mobile electric toy, for example, a game console, an electric automobile toy, an electric ship toy, and an electric airplane toy. The spacecraft may include an airplane, a rocket, a spacecraft, a spaceship, and the like.

For ease of description, the following embodiment is described by using an example in which a power-consuming apparatus according to an embodiment of the present application is a vehicle.

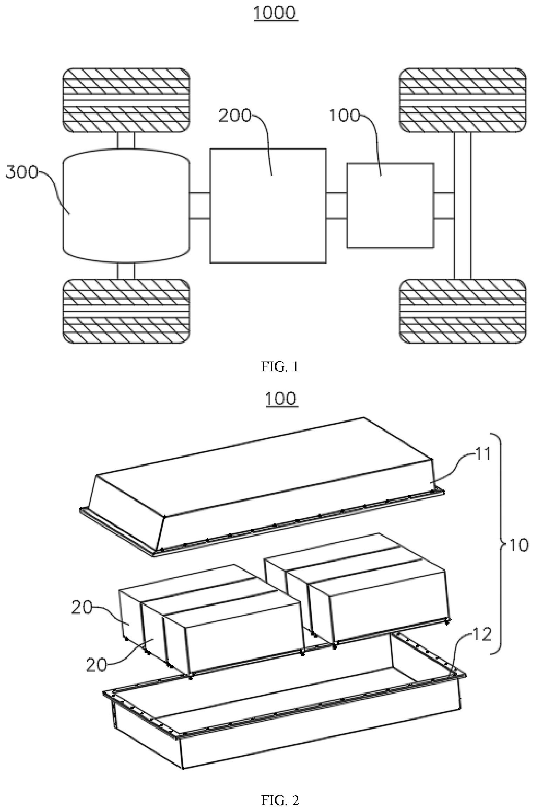

Referring to FIG. 1, FIG. 1 is a schematic diagram of a structure of a vehicle 1000 according to some embodiments of the present application. The vehicle 1000 may be a fuel powered vehicle, a gas powered vehicle, or a new energy vehicle. The new energy vehicle may be a pure electric vehicle, a hybrid electric vehicle, an extended range vehicle, or the like. A battery 100 is arranged inside the vehicle 1000, and the battery 100 may be arranged at a bottom of the vehicle 1000, a head of the vehicle 1000, or a tail of the vehicle 1000. The battery 100 may be configured to supply power to the vehicle 1000. For example, the battery 100 may be used as an operating power supply or a use power supply of the vehicle 1000. The vehicle 1000 may further include a controller 200 and a motor 300. The controller 200 is configured to control the battery 100 to supply power to the motor 300, for example, to meet operating electricity requirements during starting, navigation, and traveling of the vehicle 1000.

In some embodiments of the present application, the battery 100 may serve not only as an operating power supply or a use power supply of the vehicle 1000, but also as a driving power supply of the vehicle 1000, to alternatively or partially replace fuel or natural gas to provide driving power for the vehicle 1000.

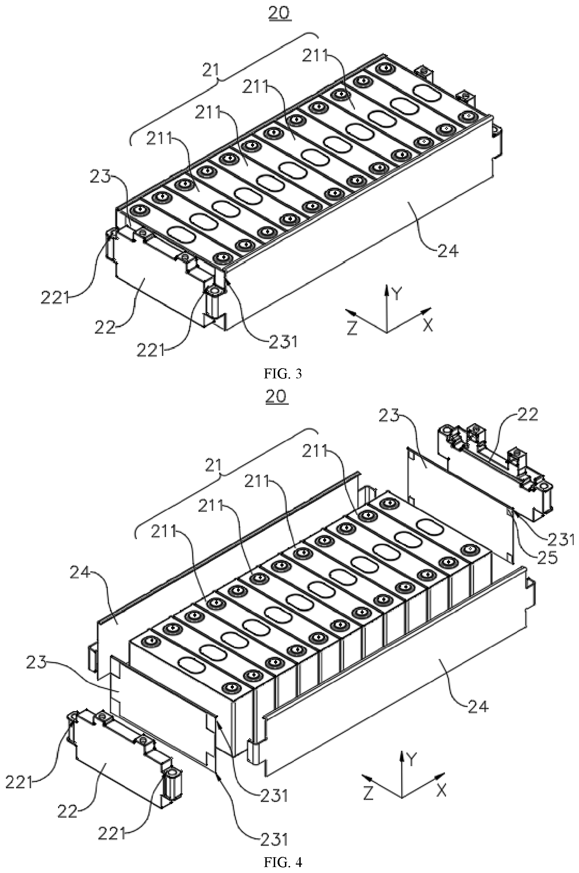

Referring to FIG. 2 and FIG. 3, FIG. 2 is a structural exploded view of a battery 100 according to some embodiments of the present application, and FIG. 3 is a schematic structural diagram of a battery module 20 according to some embodiments of the present application. A battery 100 includes a box 10 and a battery module 20, where the battery module 20 is configured to be accommodated in the box 10.

The box 10 is configured to provide an assembly space for the battery module 20. The box 10 may use a plurality of structures. In some embodiments, the box 10 may include a first box body 11 and a second box body 12, the first box body 11 and the second box body 12 cover each other, and the first box body 11 and the second box body 12 jointly define the assembly space for accommodating the battery module 20. The second box body 12 may be a hollow structure being open on one side, the first box body 11 may be a plate-shaped structure, and the first box body 11 covers an open side of the second box body 12, so that the first box body 11 and the second box body 12 jointly define the assembly space. Alternatively, each of the first box body 11 and the second box body 12 may be a hollow structure being open on one side, and an open side of the first box body 11 covers an open side of the second box body 12.

Certainly, the box 10 formed by the first box body 11 and the second box body 12 may be in various shapes, such as a cylinder, a cuboid, or a cube. For example, in FIG. 2, the shape of the box 10 is a cuboid.

In the battery 100, there may be one or a plurality of battery modules 20. For example, in FIG. 2, the battery 100 includes a plurality of battery modules 20. The plurality of battery modules 20 may be connected in series, parallel, or series-parallel. The series-parallel connection means that both series connection and parallel connection exist among the plurality of battery modules 20. The plurality of battery modules 20 may be directly connected in series, parallel, or series-parallel together, and then a whole formed by the plurality of battery modules 20 may be accommodated in the box 10. The battery 100 may further include a conductive member (such as a copper bar or an aluminum bar), and the conductive member is configured to implement an electrical connection between the plurality of battery modules 20.

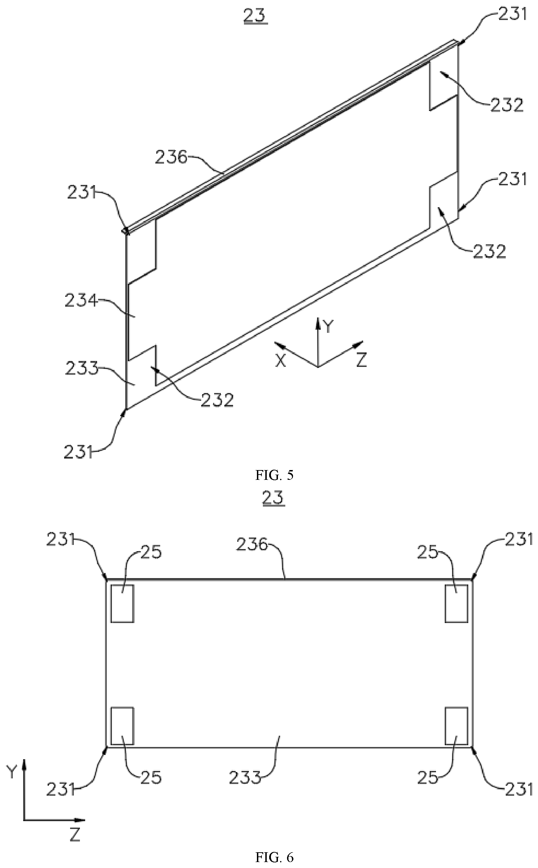

According to some embodiments of the present application, referring to FIG. 3, and further referring to FIG. 4 and FIG. 5, FIG. 4 is a structural exploded view of a battery module 20 according to some embodiments of the present application, and FIG. 5 is a schematic structural diagram of an insulation member 23 of a battery module 20 according to some embodiments of the present application. The present application provides a battery module 20. The battery module 20 includes a battery group 21, an end plate 22, and an insulation member 23. The end plate 22 is arranged in a first direction X on a side of the battery group 21, and an avoidance region 221 is formed at a corner of the end plate 22. The insulation member 23 is arranged in the first direction X between the battery group 21 and the end plate 22 to insulate the battery group 21 from the end plate 22. A corner region 231 is formed at a position on the insulation member 23 corresponding to the avoidance region 221, and the corner region 231 is fixedly connected to the battery group 21.

The battery group 21 is a component that is in the battery module 20 and that provides electric energy. For example, in FIG. 3 and FIG. 4, the battery group 21 includes a plurality of battery cells 211, and the plurality of battery cells 211 are stacked in the first direction X. Certainly, in other embodiments, the battery group 21 may alternatively include only one battery cell 211.

In the battery group 21, the plurality of battery cells 211 may be connected in series, in parallel, or in a series-parallel connection. The battery group 21 may alternatively be of another structure. For example, the battery group 21 may further include a busbar component. The busbar component is configured to connect the plurality of battery cells 211, so as to implement an electrical connection between the plurality of battery cells 211.

Each battery cell 211 may be a secondary battery or a primary battery; or may be a lithium-sulfur battery, a sodium-ion battery, or a magnesium-ion battery, but is not limited thereto. The battery cell 211 may be cuboid, prismatic, or in other shapes. For example, in FIG. 3 and FIG. 4, the battery cell 211 has a cuboid structure.

The end plate 22 is arranged in a first direction X on a side of the battery group 21. That is, the end plate 22 and the battery group 21 are of a structure arranged in the first direction X.

An avoidance region 221 is formed at a corner of the end plate 22. That is, the avoidance region 221 is a vacancy part formed at the corner of the end plate 22, so that a part of the insulation member 23 corresponding to the avoidance region 221 of the end plate 22 is exposed. The avoidance region 221 of the end plate 22 is used for locking a bolt or the like.

In some embodiments, the battery module 20 may include two end plates 22 and two side plates 24 (that is, an outer frame of the battery module 20, used for accommodating and assembling the battery group 21). The two end plates 22 are spaced and oppositely arranged in the first direction X (that is, a length direction of the battery module 20). A second direction Y is a height direction of the battery module 20. The two side plates 24 are spaced and oppositely arranged in a third direction Z (that is, a width direction of the battery module 20). The two side plates 24 and the two end plates 22 define an accommodating space used for accommodating the battery cell 211. That is, one end plate 22, one side plate 24, the other end plate 22, and the other side plate 24 are sequentially connected head to tail, to define the outer frame of the battery module 20, so as to accommodate the battery group 21. The first direction X, the second direction Y, and the third direction Z are mutually perpendicular.

Optionally, the battery module 20 includes two insulation members 23, and the insulation member 23 is arranged between each of the two end plates 22 and the battery group 21 in the first direction X.

The insulation member 23 is arranged in the first direction X between the battery group 21 and the end plate 22. That is, the insulation member 23 is arranged on a side of the battery group 21 that faces the end plate 22 in the first direction X.

The insulation member 23 has a function of insulating the end plate 22 from the battery group 21. The insulation member 23 may be made of various materials, for example, polyethylene, polypropylene, or polyvinyl chloride.

A corner region 231 is formed at a position on the insulation member 23 corresponding to the avoidance region 221. That is, a region that is exposed and that corresponds to the avoidance region 221 of the end plate 22 at a corner of the insulation member 23 is the corner region 231 of the insulation member 23.

The corner region 231 is fixedly connected to the battery group 21. Optionally, the corner region 231 may be fixedly connected to the battery group 21 through a structure such as bonding or bolting.

The insulation member 23 is arranged between the end plate 22 and the battery group 21, so that the insulation member 23 can insulate the end plate 22 and the battery group 21 from each other, to reduce a risk of short-circuiting between the end plate 22 and the battery group 21, thereby facilitating improving use reliability of the battery module 20. Fixedly connecting, to the battery group 21, the corner region 231 formed at the insulation member 23 corresponding to the avoidance region 221 at the corner of the end plate 22 helps to reduce the phenomenon of warping or separation of the corner region 231 of the insulation member 23 in the avoidance region 221 of the end plate 22, such that the structural stability of the insulation member 23 mounted between the end plate 22 and the battery group 21 can be improved, and the interference effect on an assembly region of the end plate 22 due to warping or separation of the corner region 231 of the insulation member 23 can also be reduced, thereby reducing the assembly difficulty of the battery module 20 and improving the assembly quality of the battery module 20.

According to some embodiments of the present application, referring to FIG. 4 and FIG. 5, and further referring to FIG. 6, FIG. 6 is a front view of a side of an insulation member 23 of a battery module 20 facing a battery group 21 according to some embodiments of the present application. The battery module 20 may further include a bonding member 25, the bonding member 25 is arranged between the insulation member 23 and the battery group 21, and the bonding member 25 connects the corner region 231 to the battery group 21.

The bonding member 25 is arranged between the insulation member 23 and the battery group 21. That is, the bonding member 25 is arranged on a side of the insulation member 23 that faces the battery group 21, and the bonding member 25 is located in a corner region 231 of the insulation member 23, so that the bonding member 25 can bond the corner region 231 of the insulation member 23 to an adjacent battery cell 211 in the battery group 21, to fixedly connect the corner region 231 of the insulation member 23 to the battery group 21.

For example, the bonding member 25 may be a glue, a double faced adhesive tape, a foam adhesive tape, or the like arranged on a side of the insulation member 23 that faces the battery group 21.

The bonding member 25 is arranged between the insulation member 23 and the battery group 21, so that the corner region 231 of the insulation member 23 can be bonded to the battery group 21 by using the bonding member 25, thereby fixedly connecting the corner region 231 of the insulation member 23 to the battery group 21. By using the battery module 20 of this structure, it is convenient to fix the corner region 231 of the insulation member 23 to the battery group 21, to relieve a phenomenon of warping or separation of the corner region 231 of the insulation member 23. The structure is simple and is convenient to assemble.

In some embodiments, still referring to FIG. 4, FIG. 5, and FIG. 6, the insulation member 23 is rectangular, four corner regions 231 are formed on the insulation member 23, the battery module 20 includes four bonding members 25, and each corner region 231 is connected to the battery group 21 by using one bonding member 25.

The insulation member 23 has a rectangular structure, so that the insulation member 23 has four right corners. Correspondingly, the end plate 22 also has a rectangular structure, and the end plate 22 has an avoidance region 221 formed at each of the four right corners, so that four corner regions 231 are formed on the insulation member 23 correspondingly.

The insulation member 23 has a rectangular structure, so that four corner regions 231 are formed on the insulation member 23. Four bonding members 25 are correspondingly arranged in the four corner regions 231 respectively, so that the four corner regions 231 of the insulation member 23 can be bonded to the battery group 21 by using the bonding members 25, thereby further improving structural stability of the insulation member 23 arranged between the end plate 22 and the battery group 21, and effectively relieving a phenomenon of warping or separation in the four corner regions 231 of the insulation member 23.

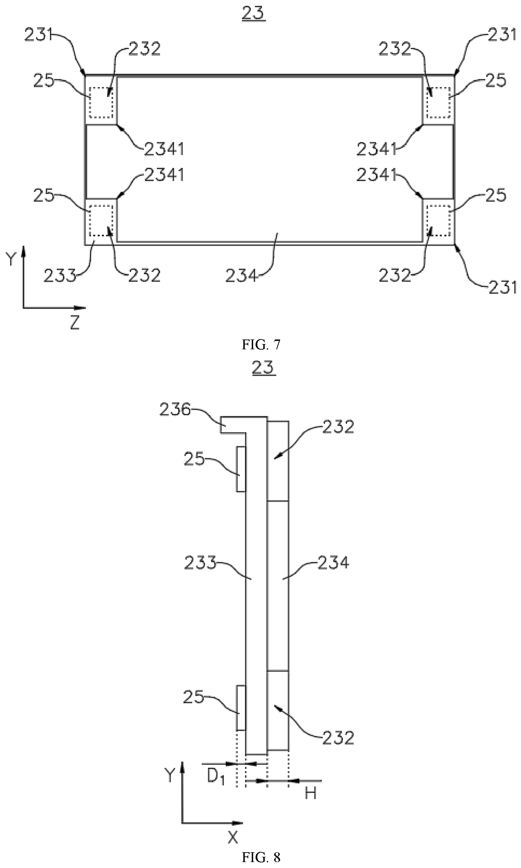

According to some embodiments of the present application, referring to FIG. 4, FIG. 5, and FIG. 6, and further referring to FIG. 7 and FIG. 8, FIG. 7 is a front view of a side of an insulation member 23 of a battery module 20 facing away from a battery group 21 according to some embodiments of the present application, and FIG. 8 is a front view of an insulation member 23 of a battery module 20 in a third direction Z according to some embodiments of the present application. In the first direction X, a region that is on a side of the insulation member 23 facing away from the battery group 21 and that corresponds to the bonding member 25 is provided with a groove 232, and an orthographic projection of the bonding member 25 is located in the groove 232.

The region that is on the side of the insulation member 23 facing away from the battery group 21 and that corresponds to the bonding member 25 is provided with the groove 232, that is, a side of a corner region 231 of the insulation member 23 that faces away from the battery group 21 in the first direction X is provided with the groove 232, and the orthographic projection of the bonding member 25 in the first direction X is located in the groove 232, that is, a bottom surface of the groove 232 covers the bonding member 25 in the first direction X.

For example, in FIG. 5 and FIG. 7, the groove 232 extends to an edge of the insulation member 23 in both the second direction Y and the third direction Z.

The groove 232 is provided in the region that is on the side of the insulation member 23 facing away from the battery group 21 and that corresponds to the bonding member 25, so that a protrusion that protrudes in the direction away from the battery group 21 and that is formed after the corner region 231 of the insulation member 23 provided with the bonding member 25 is bonded to the battery group 21 can be accommodated in the groove 232. By using the battery module 20 having such a structure, interference impact of the protrusion that protrudes in the direction away from the battery group 21 and that is formed after the region of the insulation member 23 provided with the bonding member 25 is bonded to the battery group 21 and other components such as the end plate 22 can be reduced, so that interference impact of the protrusion that is formed because the insulation member 23 is provided with the bonding member 25 on the assembly region of the end plate 22 can be reduced, thereby reducing the assembly difficulty of the battery module 20 and improving the assembly quality of the battery module 20.

According to some embodiments of the present application, referring to FIG. 8, in the first direction X, a thickness of the bonding member 25 is D₁, and a groove depth of the groove 232 is H, satisfying: D₁ ≤ H.

The thickness of the bonding member 25 is less than or equal to the groove depth of the groove 232. That is, when the bonding member 25 is arranged in the groove 232, the bonding member 25 can be entirely accommodated in the groove 232 without extending out of the groove 232, so that after the corner region 231 of the insulation member 23 is bonded to the battery cell 211 of the battery group 21 by using the bonding member 25, a protrusion structure formed by the corner region 231 by protruding toward a direction away from the battery group 21 can be accommodated in the groove 232.

The thickness of the bonding member 25 in the first direction X is set to be less than or equal to the groove depth of the groove 232 in the first direction X, so that the protrusion that protrudes in the direction away from the battery group 21 and that is formed after the corner region 231 of the insulation member 23 provided with the bonding member 25 is bonded to the battery group 21 can be entirely accommodated in the groove 232 without extending out of the groove 232, thereby further reducing interference impact of the protrusion that is formed because the insulation member 23 is provided with the bonding member 25 on the assembly region of the end plate 22.

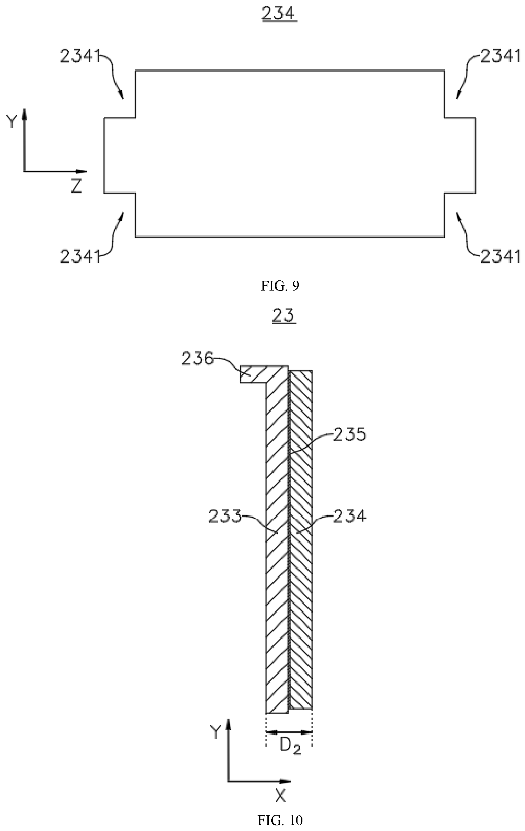

According to some embodiments of the present application, referring to FIG. 5, FIG. 6, FIG. 7, and FIG. 8, and further referring to FIG. 9, FIG. 9 is a schematic structural diagram of a second insulation layer 234 of an insulation member 23 of a battery module 20 according to some embodiments of the present application. The insulation member 23 may include a first insulation layer 233 and a second insulation layer 234 that are stacked in the first direction X, the first insulation layer 233 is located on a side of the second insulation layer 234 facing the battery group 21, and the bonding member 25 is arranged on a side of the first insulation layer 233 facing the battery group 21. A gap 2341 is provided in the first direction X in a region of the second insulation layer 234 corresponding to the bonding member 25, the gap 2341 extends through the second insulation layer 234, and the gap 2341 and a surface of the first insulation layer 233 facing the second insulation layer 234 jointly define the groove 232.

The gap 2341 is provided in the first direction X in the region of the second insulation layer 234 corresponding to the bonding member 25, and the gap 2341 extends through the second insulation layer 234. That is, the gap 2341 is formed at a position at a corner of the second insulation layer 234 corresponding to the bonding member 25, and the gap 2341 is a structure that extends through surfaces on two sides of the second insulation layer 234 in the first direction X, so that the groove 232 is formed jointly by the position on the second insulation layer 234 at which the gap 2341 is provided and the first insulation layer 233. That is, a region that is on the surface of the first insulation layer 233 facing the second insulation layer 234 and that corresponds to the gap 2341 of the second insulation layer 234 is a bottom surface of the groove 232.

It should be noted that, in some embodiments, alternatively, the insulation member 23 may be of an integral structure, that is, the insulation member 23 is of a single-layer structure. In this embodiment, a region that is on a side of the insulation member 23 facing away from the battery group 21 and that corresponds to the bonding member 25 may be provided with a groove 232 through a process such as extrusion forming or cutting.

The insulation member 23 is provided with the first insulation layer 233 and the second insulation layer 234. The first insulation layer 233 and the second insulation layer 234 are stacked in the first direction X, and the first insulation layer 233 is located on a side of the second insulation layer 234 that faces the battery group 21. By disposing the bonding member 25 on the side of the first insulation layer 233 that faces the battery group 21, and disposing, on a region on the second insulation layer 234 corresponding to the bonding member 25, a gap 2341 that extends through the second insulation layer 234, the gap 2341 and a surface of the first insulation layer 233 that faces the second insulation layer 234 jointly form a groove 232, so as to form the groove 232 on a region that corresponds to the bonding member 25 and that is on a side of the insulation member 23 facing away from the battery group 21. Use of the insulation member 23 of such a structure facilitates processing and manufacturing, and helps reduce difficulty in disposing a groove 232 on the insulation member 23. Therefore, the production efficiency of the battery module 20 can be effectively improved.

In some embodiments, referring to FIG. 8, a thickness of the first insulation layer 233 is equal to a thickness of the second insulation layer 234 in the first direction X.

Through a structure in which the first insulation layer 233 and the second insulation layer 234 of the insulation member 23 are set to have a same thickness in the first direction X, the first insulation layer 233 and the second insulation layer 234 are formed separately by processing sheets having the same thickness, thereby facilitating optimizing reserves of raw materials, to reduce manufacturing costs of the insulation member 23.

According to some embodiments of the present application, referring to FIG. 10, FIG. 10 is a cross-sectional view of an insulation member 23 of a battery module 20 according to some embodiments of the present application. The insulation member 23 may further include a bonding layer 235. The bonding layer 235 is arranged between the first insulation layer 233 and the second insulation layer 234 in the first direction X, and the bonding layer 235 connects the first insulation layer 233 to the second insulation layer 234.

The bonding layer 235 has a function of bonding the first insulation layer 233 to the second insulation layer 234. The bonding layer 235 may have a plurality of structures. For example, the bonding layer 235 may be a glue, a double faced adhesive tape, or the like arranged between the first insulation layer 233 and the second insulation layer 234.

Certainly, the structure of the insulation member 23 is not merely limited thereto. In another embodiment, alternatively, the insulation member 23 may be not provided with the bonding layer 235, and the first insulation layer 233 and the second insulation layer 234 are in a direct hot-melt connection.

The bonding layer 235 is arranged between the first insulation layer 233 and the second insulation layer 234, so that the first insulation layer 233 and the second insulation layer 234 can be connected by using the bonding layer 235. In an aspect, the structural stability of the first insulation layer 233 and the second insulation layer 234 being stacked can be improved, and in another aspect, the assembly difficulty of the first insulation layer 233 and the second insulation layer 234 can be reduced, thereby facilitating manufacturing, and facilitating optimizing a production rhythm.

According to some embodiments of the present application, still referring to FIG. 10, a thickness of the insulation member 23 in the first direction X is D₂, satisfying: 0.4 mm ≤ D₂ ≤ 2 mm.

For example, the thickness D₂ of the insulation member 23 in the first direction X may be 0.4 mm, 0.5 mm, 0.6 mm, 0.7 mm, 0.8 mm, 0.9 mm, 1 mm, 1.2 mm, 1.5 mm, 1.8 mm, or 2 mm.

It should be noted that, in the embodiment in which the thickness of the first insulation layer 233 is equal to the thickness of the second insulation layer 234, preferably, the thickness of the first insulation layer 233 in the first direction X may be 0.25 mm. Correspondingly, the thickness of the second insulation layer 234 in the first direction X is 0.25 mm.

By setting the thickness of the insulation member 23 in the first direction X to be greater than or equal to 0.4 mm, in an aspect, an effect of insulating the end plate 22 from the battery group 21 by the insulation member 23 can be improved, to reduce a risk of short-circuiting between the end plate 22 and the battery group 21; in another aspect, the hardness of the insulation member 23 can be improved, so that the insulation member 23 has a relatively good contour form, thereby facilitating assembly of the insulation member 23 between the end plate 22 and the battery group 21, and reducing a phenomenon of deformation of the insulation member 23. The thickness of the insulation member 23 in the first direction X is set to be less than or equal to 2 mm, to save space occupied by the insulation member 23, thereby improving space utilization of the battery module 20, which helps improve the energy density of the battery module 20.

According to some embodiments of the present application, referring to FIG. 5, FIG. 8, and FIG. 10, an end of the insulation member 23 in a second direction Y is provided with a flanging portion 236, the flanging portion 236 extends from a side of the insulation member 23 facing the battery group 21 toward a direction approaching the battery group 21, the flanging portion 236 butts against the battery group 21 in the second direction Y, and the second direction Y is perpendicular to the first direction X.

The second direction Y is a height direction of the battery module 20, is also a height direction of the battery cell 211, and is also an assembly direction in which the insulation member 23 is assembled between the end plate 22 and the battery group 21.

The flanging portion 236 extends from the side of the insulation member 23 facing the battery group 21 toward the direction approaching the battery group 21. That is, the flanging portion 236 is a structure that protrudes toward the direction approaching the battery group 21 in the first direction X, and protrudes from the side of the insulation member 23 facing the battery group 21.

It should be noted that, in the embodiment in which the insulation member 23 includes the first insulation layer 233 and the second insulation layer 234 that are stacked in the first direction X, the flanging portion 236 is connected to an end of the first insulation layer 233 in the second direction Y, and protrudes from a side of the first insulation layer 233 that faces the battery group 21, so that the flanging portion 236 and the first insulation layer 233 form an "L"-shaped structure. For example, in FIG. 8, a size of the flanging portion 236 that protrudes from the side of the first insulation layer 233 facing the battery group 21 is greater than the thickness of the bonding member 25 in the first direction X. That is, the flanging portion 236 extends beyond the side of the bonding member 25 facing the battery group 21 in the first direction X, so that the flanging portion 236 can butt against the battery group 21. For example, in FIG. 8 and FIG. 10, the flanging portion 236 and the first insulation layer 233 are in an integrally formed structure. Certainly, in another embodiment, the flanging portion 236 and the first insulation layer 233 are in a split structure. The flanging portion 236 may be connected to one end of the first insulation layer 233 in the second direction Y through a structure such as bonding or hot-melt connection.

The flanging portion 236 is arranged at an end of the insulation member 23 in the second direction Y, and the flanging portion 236 protrudes, in the first direction X, from a side of the insulation member 23 that faces the battery group 21, so that the flanging portion 236 can butt against the battery group 21 in the second direction Y. By using the insulation member 23 of this structure, in an aspect, the insulation member 23 can be limited and positioned to some extent by using the flanging portion 236, so as to assemble the insulation member 23 between the end plate 22 and the battery group 21, thereby helping reduce difficulty in assembling the insulation member 23 between the end plate 22 and the battery group 21, and in another aspect, the firmness and structural stability of assembling the insulation member 23 between the end plate 22 and the battery group 21 can be further improved.

According to some embodiments of the present application, referring to FIG. 3 and FIG. 4, the battery group 21 may include a plurality of battery cells 211, and the plurality of battery cells 211 are stacked in the first direction X. Certainly, in other embodiments, alternatively, the plurality of battery cells 211 may be in a structure of being stacked in the third direction Z.

The battery group 21 is provided with a plurality of battery cells 211, and the plurality of battery cells 211 is in a structure of being stacked in the first direction X, so that it is convenient to arrange the insulation member 23 between the end plate 22 and an adjacent battery cell 211, and it is convenient to fixedly connect the corner region 231 of the insulation member 23 to the adjacent battery cell 211, thereby helping reduce assembly difficulty of the insulation member 23 and the battery group 21.

According to some embodiments of the present application, referring to FIG. 3 and FIG. 4, the battery module 20 may include two end plates 22, and the two end plates 22 are respectively arranged on two sides of the battery group 21 in the first direction X. The insulation member 23 is arranged between each of the two end plates 22 and the battery group 21 in the first direction X.

For example, the end plate 22 is made of a metal material.

The battery module 20 is provided with two end plates 22, and the two end plates 22 are respectively located on two sides of the battery group 21 in the first direction X, so that the battery group 21 can be clamped and assembled. By arranging an insulation member 23 between each of the two end plates 22 and the battery group 21, the two end plates 22 and the battery group 21 can be effectively insulated, to improve use reliability of the battery module 20.

In some embodiments, still referring to FIG. 3 and FIG. 4, the battery module 20 may further include two side plates 24, the two side plates 24 are respectively arranged on two sides of the battery group 21 in a third direction Z, two ends of the side plate 24 in the first direction X are respectively connected to the two end plates 22, and the third direction Z is perpendicular to the first direction X.

The two ends of the side plate 24 in the first direction X are respectively connected to the two end plates 22, that is, the two end plates 22 are respectively connected to two ends of the side plate 24 in the first direction X, so that the two end plates 22 and the two side plates 24 define an outer frame for accommodating the battery group 21.

For example, the side plate 24 is made of a heat insulation material, for example, rubber, plastic, or mica.

The battery module 20 is further provided with two side plates 24. The two side plates 24 are respectively arranged on two sides of the battery group 21 in the third direction Z, and two ends of the side plate 24 in the first direction X are respectively connected to two end plates 22, so that the two side plates 24 and the two end plates 22 define an outer frame for assembling the battery group 21, which helps improve integrity and structural stability of the battery module 20.

According to some embodiments of the present application, the present application further provides a battery 100. The battery 100 includes the battery module 20 according to any one of the foregoing solutions.

According to some embodiments of the present application, the present application further provides a power-consuming apparatus. The power-consuming apparatus includes the battery 100 according to any one of the foregoing solutions, and the battery 100 is configured to provide electric energy for the power-consuming apparatus.

The power-consuming apparatus may be any one of the foregoing devices or systems to which the battery 100 is applied.

According to some embodiments of the present application, referring to FIG. 3 to FIG. 10, the present application provides a battery module 20. The battery module 20 includes a battery group 21, two end plates 22, two side plates 24, and two insulation members 23. The battery group 21 includes a plurality of battery cells 211, and the plurality of battery cells 211 are stacked in the first direction X. The two end plates 22 are respectively arranged on two sides of the battery group 21 in the first direction X. An avoidance region 221 is formed at each of four corners of the end plate 22. The battery module 20 further includes two side plates 24, the two side plates 24 are respectively arranged on two sides of the battery group 21 in a third direction Z, and two ends of the side plate 24 in the first direction X are respectively connected to the two end plates 22, to define an outer frame for accommodating the battery group 21. The two insulation members 23 are respectively arranged between the battery group 21 and the two end plates 22, to insulate the battery group 21 from the two end plates 22. A corner region 231 is formed at a position on the insulation member 23 corresponding to the avoidance region 221. A bonding member 25 is arranged on a side of the insulation member 23 that faces the battery group 21, and the bonding member 25 is located in a corner region 231 of the insulation member 23, so that the bonding member 25 bonds the corner region 231 of the insulation member 23 to an adjacent battery cell 211 in the battery group 21. the insulation member 23 is rectangular, four corner regions 231 are formed on the insulation member 23, the battery module 20 includes four bonding members 25, and each corner region 231 is connected to the battery group 21 by using one bonding member 25. In the first direction X, a region that is on a side of the insulation member 23 facing away from the battery group 21 and that corresponds to the bonding member 25 is provided with a groove 232, an orthographic projection of the bonding member 25 is located in the groove 232, a thickness of the bonding member 25 is D₁, and a groove depth of the groove 232 is H, satisfying: D₁ ≤ H. The insulation member 23 includes a first insulation layer 233 and a second insulation layer 234 that are stacked in the first direction X and that have a same thickness, the first insulation layer 233 is located on a side of the second insulation layer 234 facing the battery group 21, and the bonding member 25 is arranged on a side of the first insulation layer 233 facing the battery group 21. A gap 2341 is provided in the first direction X in a region of the second insulation layer 234 corresponding to the bonding member 25, the gap 2341 extends through the second insulation layer 234, and the gap 2341 and a surface of the first insulation layer 233 facing the second insulation layer 234 jointly define the groove 232. A bonding layer 235 is arranged between the first insulation layer 233 and the second insulation layer 234, and the bonding layer 235 bonds the first insulation layer 233 to the second insulation layer 234. An end of the first insulation layer 233 of the insulation member 23 in a second direction Y is provided with a flanging portion 236, the flanging portion 236 extends from a side of the first insulation layer 233 facing the battery group 21 toward a direction approaching the battery group 21, the flanging portion 236 butts against the battery group 21 in the second direction Y, and The first direction X, the second direction Y, and the third direction Z are perpendicular to each other. a thickness of the insulation member 23 in the first direction X is D₂, satisfying: 0.4 mm ≤ D₂ ≤ 2 mm.

It needs to be noted that the embodiments in the present application and the features in the embodiments may be combined with each other without causing any conflict.

The above descriptions are merely preferred embodiments of the present application and are not intended to limit the present application. For those skilled in the art, the present application may have various modifications and changes. Any modification, equivalent replacement, or improvement made without departing from the spirit and principle of the present application shall fall within the protection scope of the present application.

## Claims

1. A battery module, comprising:
a battery group;
an end plate, arranged in a first direction on a side of the battery group, wherein an avoidance region is formed at a corner of the end plate; and
an insulation member, arranged in the first direction between the battery group and the end plate to insulate the battery group from the end plate, wherein
a corner region is formed at a position on the insulation member corresponding to the avoidance region, and the corner region is fixedly connected to the battery group.

2. The battery module according to claim 1, wherein the battery module further comprises:
a bonding member, arranged between the insulation member and the battery group, wherein the bonding member connecting the corner region to the battery group.

3. The battery module according to claim 2, wherein the insulation member is rectangular, four corner regions are formed on the insulation member, the battery module comprises four bonding members, and each of the corner regions is connected to the battery group by using one of the bonding members.

4. The battery module according to claim 2 or 3, wherein in the first direction, a region that is on a side of the insulation member facing away from the battery group and that corresponds to the bonding member is provided with a groove, and an orthographic projection of the bonding member is located in the groove.

5. The battery module according to claim 4, wherein in the first direction, a thickness of the bonding member is D₁, and a groove depth of the groove is H, satisfying: D₁ ≤ H.

6. The battery module according to claim 4 or 5, wherein the insulation member comprises a first insulation layer and a second insulation layer that are stacked in the first direction, the first insulation layer is located on a side of the second insulation layer facing the battery group, and the bonding member is arranged on a side of the first insulation layer facing the battery group, wherein
a gap is provided in the first direction in a region of the second insulation layer corresponding to the bonding member, the gap extends through the second insulation layer, and the gap and a surface of the first insulation layer facing the second insulation layer jointly define the groove.

7. The battery module according to claim 6, wherein a thickness of the first insulation layer is equal to a thickness of the second insulation layer in the first direction.

8. The battery module according to claim 6 or 7, wherein the insulation member further comprises:
a bonding layer, arranged between the first insulation layer and the second insulation layer in the first direction, wherein the bonding layer connects the first insulation layer to the second insulation layer.

9. The battery module according to any one of claims 1 to 8, wherein a thickness of the insulation member in the first direction is D₂, satisfying: 0.4 mm ≤ D₂ ≤ 2 mm.

10. The battery module according to any one of claims 1 to 9, wherein an end of the insulation member in a second direction is provided with a flanging portion, the flanging portion extends from a side of the insulation member facing the battery group toward a direction approaching the battery group, the flanging portion butts against the battery group in the second direction, and the second direction is perpendicular to the first direction.

11. The battery module according to any one of claims 1 to 10, wherein the battery group comprises a plurality of battery cells, and the plurality of battery cells are stacked in the first direction.

12. The battery module according to any one of claims 1 to 11, wherein the battery module comprises two end plates, and the two end plates are respectively arranged on two sides of the battery group in the first direction, wherein
the insulation member is arranged between each of the two end plates and the battery group in the first direction.

13. The battery module according to claim 12, wherein the battery module further comprises two side plates, the two side plates are respectively arranged on two sides of the battery group in a third direction, two ends of the side plate in the first direction are respectively connected to the two end plates, and the third direction is perpendicular to the first direction.

14. A battery, comprising the battery module according to any one of claims 1 to 13.

15. A power-consuming apparatus, comprising the battery according to claim 14, wherein the battery is configured to provide electric energy.
